# EUROPÄISCHE PATENTSCHRIFT

(11) **EP 1 294 783 B1**
(45) Veröffentlichungstag und Bekanntmachung des Hinweises auf die Patenterteilung: **19.08.2009**
(21) Anmeldenummer: 01953985.7
(22) Anmeldetag: 15.06.2001
(51) Int. Cl.: C08F 267/00, C08F 8/00, C08F 20/00, C08F 220/00

(54) **VERFAHREN ZUR HERSTELLUNG VERNETZBARER ACRYLATHAFTKLEBEMASSEN**
METHOD FOR THE PRODUCTION OF CROSS-LINKABLE ACRYLATE CONTACT ADHESIVE MATERIALS
PROCEDE DE PRODUCTION DE SUBSTANCES AUTO-ADHESIVES D'ACRYLATE RETICULABLES

(30) Priorität: 15.06.2000 DE 10029553
(43) Veröffentlichungstag der Anmeldung: 26.03.2003
(73) Patentinhaber: TESA SE, 20253 Hamburg (DE)
(72) Erfinder: HUSEMANN, Marc, 22605 Hamburg (DE); ZÖLLNER, Stephan, 21244 Buchholz/Nordheide (DE); SCHRÖDER, Andreas, 22547 Hamburg (DE)
(86) Internationale Anmeldenummer: PCT/EP2001/006798
(87) Internationale Veröffentlichungsnummer: WO 2001/096430

(56) Entgegenhaltungen:
- EP-A- 0 842 960
- US-A- 5 147 938
- US-A- 5 468 812

## Beschreibung

Die Erfindung betrifft ein Verfahren zur Herstellung von mit Doppelbindungen funktionalisierten Polyacrylaten mit haftklebenden Eigenschaften, deren Kohäsion durch strahleninduzierte Vernetzung erhöht wird, sowie ein mit dieser Polyacrylathaftklebemasse ausgerüstetes Klebeband.

Schmelzhaftkleber sind Verbindungen, die die Eigenschaften von Schmelzklebern (Hotmelts) mit den Eigenschaften von Haftklebemassen vereinigen. Schmelzhaftkleber schmelzen bei erhöhten Temperaturen und formen bei Abkühlung eine permanent klebrige Schicht, die bei Kontakt mit einem Substrat adhäsiv auffließt. In Kombination mit unterschiedlichen Substraten, wie z.B. Papier, Gewebe, Metall und Kunststoffilmen, können eine Vielzahl unterschiedlicher Produkte, insbesondere Haftklebebänder sowie Etiketten, hergestellt werden. Diese Haftklebeprodukte haben einen weiten Anwendungsbereich in der Automobilindustrie, z.B. zur Befestigung oder zur Abdichtung, oder in der pharmazeutischen Industrie, z.B. für VVirkstoffpflaster.

Die typische Beschichtungstemperatur für Schmelzhaftkleber liegt zwischen 80 und 180 °C. Um eine niedrige Beschichtungstemperatur zu erreichen, sollte das Molekulargewicht des zu beschichtenden Schmelzhaftklebers möglichst niedrig sein. Andererseits muß die Haftklebemasse auch eine ausreichende Kohäsion aufweisen, damit bei der Anwendung als Haftklebeband die Klebewirkung mit dem Substrat dauerhaft gewährleistet ist. Zur Erhöhung der Kohäsion ist wiederum ein hohes Molekulargewicht essentiell.

Zur Lösung dieses Problems wurden Polymere entwickelt, welche Seitenketten besitzen. Diese Polymere besitzen ein relativ geringes Molekulargewicht, enthalten aber Doppelbindungen entlang der Seitenketten. Derartige Polymere, wie z. B. Naturkautschuk oder SBS bzw. SIS, können mit UV-Strahlung oder ionisierender Strahlung effizient vernetzt werden. Auf diese Weise gelingt es, kohäsive Haftklebemassen herzustellen.

Dieses Prinzip läßt sich nicht auf Acrylathaftschmelzkleber übertragen, da hier die entsprechenden Polacrylate über eine freie radikalische Polymerisation hergestellt werden. In diesem Polymerisationsprozeß werden nahezu alle Doppelbindungen umgesetzt, so daß eine Vernetzung über Doppelbindungen nicht mehr stattfinden kann.

Zusätzlich treten während der Polymerisation Vergelungen auf. Ein Beispiel hierfür wurde in der US 4,234,662 aufgezeigt. Hier wurde zur Polymerisation Allylacrylat bzw. Allylmethacrylat eingesetzt.

Eine weitere Möglichkeit zur Funktionalisierung mit Doppelbindungen besteht durch polymeranaloge Reaktionen. Bezogen auf UV-vernetzbare Acrylathotmelts wurden in der US 5,536,759 die Umsetzung von Hydroxy- oder Carbonsäuregruppen enthaltenden Polyacrylaten mit 1-(1-Isocyanato-1-methylethyl)-3-(1-methylethenyl)benzol (m-TMI) beschrieben. Hierbei wird ein einpolymerisierter Photoinitiator zur effizienten UV-Vernetzung benötigt. Mit der UV-Vernetzung sind noch weitere Nachteile, wie z.B. geringe Bahngeschwindigkeiten und eine geringe UV-Penetrationstiefe in der Haftklebemasse, verbunden. Letztendlich können auch zugesetzte Harze UV-Licht absorbieren und die Vernetzung negativ beeinflussen.

Aufgrund der relativ geringen Reaktivität der Allylgruppen sind im Hinblick auf eine Vernetzungsreaktion allerdings drastische Versuchsbedingungen notwendig, insbesondere hohe Temperaturen oder eine lange Bestrahlungsdauer. Für die Anwendung als Haftklebemasse sind die allylmodifizierten Acrylatpolymere daher nicht geeignet, da hier nach der Verarbeitung des Polyacrylates, beispielsweise der Auftragung als Haftklebemasse auf einen Träger, eine Vernetzung zur Erhöhung der Kohäsion erwünscht ist. Hohe Temperaturen führen allerdings zur Gelbildung ("Vergelung") Im Prozeß, wobei es zu einer unerwünschten Aushärtung der Klebmasse kommt, so daß eine Beschichtung beispielsweise nicht mehr möglich ist.

Weiterhin lassen sich Polyacrylate mit Carbonsäure-, Hydroxy-, Epoxid- und Amingruppen in einer polymeranalogen Reaktion mit Doppelbindungen enthaltenden Verbindungen umsetzen, siehe hierzu die US 4,665,106. Diese Reaktion konnte aber aufgrund der geringen thermischen Beständigkeit der beteiligten Komponenten nicht auf Hotmelts angewendet werden. Zudem ergaben sich unvorteilhafte Prozeßbedingungen aus der Tatsache, daß zur Vermeidung einer Vergelung große Mengen an Regler zum Polyacryat zugesetzt werden mußten.

Die US 5,147,938 und die US 5,468,812 offenbaren Haftklebemassen auf Acrylatbasis, die durch die Polymerisation von Fluoroacrylmonomeren und Hydroxyethylacrylaten oder Hydroxypropylmethacrylaten und einer weiteren Reaktion unter Zugabe von Isocyanatoethylmethacrylaten hergestellt werden, nach der Reaktion zwischen den funktionellen Gruppen und den Isocyanatogruppen findet eine Vernetzung der Polymere durch Bestrahlung statt. Bei den in diesen Schriften dargestellten Verfahren werden zunächst Oligomere (Präpolymere) hergestellt, welche Fluor als Substituent enthalten. Die Polymerisationsreaktion ist zu diesem Zeitpunkt erst bis zu einem geringen Umsatz vollzogen. In einem zweiten Schritt wird dann die gegebenenfalls vorhandene Isocyanatogruppe copolymerisiert. Bei den genannten Verfahren ist jedoch die Gefahr der Vergelung der Massen recht hoch.

Generell läßt sich feststellen, daß bei bisherigen Verfahren die thermische Stabilität der Polyacrylatmassen durch den Einbau von Doppelbindungen herabgesetzt wird, so daß derart modifizierte Polyacrylatmassen für die Verarbeitung als Heißschmelzmasse nicht oder nur schlecht geeignet sind.

Aufgabe der Erfindung ist es, ein Verfahren zur Herstellung von Haftklebemassen auf Acrylatbasis zur Verfügung zu stellen, welche bei Raumtemperatur ein viskoelastisches Verhalten aufweisen und welche die Nachteile des Standes der Technik nicht aufzeigen. Dabei soll eine Vergelung der Haftklebemassen verhindert werden; insbesondere soll die thermische Stabilität der Haftklebemasse durch den Einbau der Doppelbindungen nicht verloren gehen.

Die Aufgabe wird überraschend und für den Fachmann nicht vorhersehbar gelöst durch ein Verfahren, wie es im Hauptanspruch dargestellt wird. Die weiteren Ansprüche betreffen vorteilhafte Weiterentwicklungen dieses Verfahrens, die derart hergestellte Haftklebemasse sowie eine Verwendung dieser Haftklebemasse.

Demgemäß betrifft Anspruch 1 ein Verfahren zur Herstellung einer Haftklebemasse auf Acrylatbasis. Dabei wird
a) zunächst durch freie radikalische Polymerisation (Co-)Polymere aus den folgenden Monomeren hergestellt werden:
   i) eine Mischung von Acrylmonomeren oder aus Acryl- und Vinylmonomeren
   ii) Vinylgruppen enthaltende Monomere mit jeweils mindestens einer gegenüber radikalischer Polymerisation unreaktiven funktionellen Gruppe, wobei die funktionellen Gruppen derart gewählt werden, daß sie in der Lage sind, mit Isocyanatogruppen polymeranaloge Reaktionen einzugehen, mit einem Anteil von 0,1 bis 25 Gew.-% am Monomergemisch,
b) durch eine weitere Reaktion unter Zugabe von (Isocyanatoethyl)acrylsäureester und/oder (Isocyanatoethyl)methacrylester Doppelbindungen entlang der Polymerkette eingeführt werden, und
c) nach der Reaktion zwischen den funktionellen Gruppen und den Isocyanatogruppen eine Vernetzung der Polymere durch Bestrahlung mit energiereicher Strahlung stattfindet.

Bei dem erfindungsgemäßen Verfahren ist die radikalische Polymerisation a) vor der weiteren Reaktion b) abgeschlossen.

Die Monomermischung kann dabei aus zwei oder mehreren Monomeren auf Acrylatbasis oder auf Vinylbasis zusammengesetzt sein. Mindestens eine Verbindungsgruppe der unterschiedlichen Monomere muß dabei durch die oben dargestellten funktionellen Gruppen substituiert sein.

Zunächst findet durch die radikalische Copolymerisation der Umsatz der eingesetzten Monomere statt, wobei die Monomere, welche die funktionellen Gruppen enthalten, in die (Co-)Polymerketten eingebaut werden. Die mittleren Molekulargewichte der bei der freien radikalischen Polymerisation entstehenden Haftklebemassen werden derart gewählt, daß sie in einem für Polyacrylatmassen üblichen Bereich, also zwischen 200.000 und 2.000.000 liegen; speziell für die weitere Verwendung als Schmelzhaftkleber werden Haftklebemassen mit mittleren Molekulargewichten von 250.000 bis 800.000 hergestellt. Die Polymerisation kann in Gegenwart eines organischen Lösungsmittels, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Die Polymerisationszeit beträgt - je nach Umsatz und Temperatur - zwischen 6 und 48 Stunden. Je höher die Reaktionstemperatur gewählt werden kann, das heißt, je höher die thermische Stabilität des Reaktionsgemisches ist, desto geringer kann die Reaktionsdauer gewählt werden.

Zu der Copolymermischung wird dann (Isocyanatoethyl)acrylsäureester und/oder (Isocyanatoethyl)methacrylester gegeben. Zur Einführung der Doppelbindungen wird das gesättigte Polyacrylat mit (Isocyanatoethyl)acrylsäureester oder (Isocyanatoethyl)methacrylsäureester in einer separaten Reaktion umgesetzt. Durch die bereits vorher abgeschlossene radikalische Polymerisation werden freie Radikale vermieden, so daß kein Vergelungsprozeß eintritt.

Die Reaktion findet zwischen den Isocyanatogruppen und den funktionellen Gruppen statt, wobei die Acrylatbausteine der Isocyanatoverbindungen unter Beibehaltung ihrer Doppelbindungen als Seitenketten an die Polymerkette angebaut werden. Die Verknüpfungsstellen sind dabei die ursprünglich mit den funktionellen Gruppen besetzten Atome der Polymerketten.

Hierbei handelt es sich in der Regel um eine Additionsreaktion; gegebenenfalls kann es danach zur Eliminierung kommen. Die Gesamtreaktion zur Einführung der Doppelbindungen kann also ebenfalls eine Kondensationsreaktion sein.

Die Reaktion kann durch Zugabe eines Katalysators, wie z.B. Dibutylzinndilaurat, beschleunigt werden.

In für das Verfahren besonders vorteilhafter Weise finden nach der Polymerisation ein Aufkonzentrationsschritt, die Zugabe der (Isocyanatoethyl)acrylsäureester und/oder (Isocyanatoethyl)methacrylester und die Reaktion der funktionellen Gruppen mit den (Isocyanatoethyl)acrylsäureestern und/oder (Isocyanatoethyl)methacrylestern in einer einzigen Apparatur statt.

In einer Weiterentwicklung der Erfindung findet dieser Prozeß in einem Extruder statt, als hierfür sehr geeignet hat sich ein Entgasungsextruder herausgestellt (reaktive Extrusion). Sehr geeignet verwendet werden kann beispielsweise ein Doppelschneckenextruder (Werner & Pfleiderer, ZSK 40). Die durch die radikalische Polymerisation hergestellten Acrylathaftklebemassen werden im Extruder aufkonzentriert und vom Lösungsmittel befreit. In für das erfindungsgemäße Verfahren vorteilhafter Weise liegt der Gehalt an Lösungsmittel in der Polymermasse nach dem Aufkonzentrationsprozeß bei unter 2 Gew.-%, insbesondere bei unter 0,5 Gew.-%. Nach der Aufkonzentration erfolgt die Zugabe der (Isocyanatoethyl)acrylsäureester und/oder (Isocyanatoethyl)methacrylester in derselben Apparatur wie der Aufkonzentrationsschritt. Hier findet die Reaktion zwischen den (Isocyanatoethyl)acrylsäureestern und/oder (Isocyanataethyl)methacrylestem (Isocyanatoethyl)acrylsäureester und/oder (Isocyanatoethyl)methacrylester und den in die Polymerketten eingebauten funktionellen Gruppen statt.

In einer vorteilhaften Ausführung des Verfahrens dienen Hydroxy-, Amin-, Carbonsäure-und/oder Amidgruppen als funktionelle Gruppen.

Spezifische Beispiele sind Monomere wie 2-Hydroxyethylacrylat, 2-Hydroxypropylacrylat, 4-Hydroxybutylacrylat und deren Methacrylate, Acrylsäure, Methacrylsäure, t-Butylaminoethylmethacrylat, Acrylamide und Methacrylamide sowie Allylalkohol. Diese Aufzählung erhebt keinen Anspruch auf Vollständigkeit.

In vorteilhafter Vorgehensweise des erfindungsgemäßen Verfahrens wird als Monomer für die Copolymerisation mindestens eine Verbindung der folgenden allgemeinen Formel eingesetzt 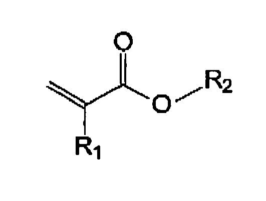 wobei R₁ = H oder CH₃ ist und der Rest R₂ gewählt wird aus der Gruppe der verzweigten oder unverzweigten, gesättigten Alkylgruppen mit 4 bis 14, bevorzugt 4 bis 9 Kohlenstoffatomen.

Spezifische Beispiele für Acryl- und Methacrylsäureester, die für das erfindungsgemäße Verfahren vorteilhaft eingesetzt werden können, sind n-Butylacrylat, n-Pentylacrylat, n-Hexylacrylat, n-Heptylacrylat, n-Octylacrylat, n-Nonylacrylat und deren verzweigten Isomere, wie z.B. 2-Ethylhexylacrylat, ohne sich durch diese Aufzählung einschränken zu wollen.

Acrylmomonere, die für das erfindungsgemäße Verfahren ebenfalls vorteilhaft eingesetzt werden können, umfassen alpha, beta ungesättigte Mono- und Di-Carbonsäuren mit 3 - 5 C-Atomen.

Besonders günstig für das erfindungsgemäße Verfahren ist es ebenfalls, wenn als Monomer für die Copolymerisation mindestens eine Verbindung aus der folgenden Gruppe verwendet wird:
Vinylester, Vinylether, Vinylhalogenide, Vinylidenhalogenide, Nitrile ethylenisch ungesättigter Kohlenwasserstoffe, Vinylverbindungen mit aromatischen Cyclen und Heterocyclen in α-Stellung.

Hier seien als nicht ausschließliche Beispiele, ohne sich durch die Auswahl unnötig beschränken zu wollen, genannt: Vinylacetat, Vinylformamid, Vinylpyridin, Acrylamide, Acrylsäure, Ethylvinylether, Vinylchlorid, Vinylidenchlorid, Acrylonitril, Maleinsäureanhydrid, Styrol und dessen Derivate.

Zusätzlich ist es von Vorteil, wenn weitere Acrylatmonomere, wie z.B. Methylacrylate und Methylmethacrylate, die nicht-klebrige Eigenschaften besitzen, in Kombination mit Acryl-und Vinylmonomeren eingesetzt werden, die als klebrig gelten. Durch die Menge und die Auswahl der Comonomere wird die Haftklebrigkeit der Haftklebemasse gesteuert.

Die Menge an eingesetztem (Isocyanatoethyl)acrylsäureester und/oder (Isocyanatoethyl)-methacrylester kann dabei derart gewählt werden, daß sie der Menge der für eine Addition oder eine Kondensation zur Verfügung stehenden funktionellen Gruppen stöchiometrisch entspricht. Besser ist es jedoch, die Menge an eingesetztem (Isocyanatoethyl)acrylsäureester und/oder (Isocyanatoethyl)-methacrylester geringer zu wählen.

In bevorzugter Weise beträgt der Anteil an (Isocyanatoethyl)acrylsäureester und/oder (Isocyanatoethyl)methacrylester für das erfindungsgemäße Verfahren 0,1 - 20 Gew.-%, bezogen auf die Mischung der eingesetzten Monomere.

Durch eine "Unterdosierung" in Bezug auf den Anteil der zur Verfügung stehenden funktionellen Gruppen wird eine vollständige beziehungsweise weitgehend vollständige Umsetzung der giftigen Isocyanatoverbindungen gewährleistet, so daß im Endprodukt keine Restmengen an Isocyanatoverbindungen vorliegen. Zur vollständigen Umsetzung der eventuell dennoch verbleibenden Restmengen an Isocyanat kann nach dem Verarbeitungsprozeßprozeß der Haftklebemasse gegebenenfalls durch Bestrahlung, insbesondere mit Elektronen, nachvemetzt werden.

Optional können auch weitere funktionelle Monomere zugesetzt werden, deren funktionelle Gruppen nicht mit Isocyanaten reagieren. Solche Monomere könnten N-substituierte Amide, tertiäre Amine oder Lactame sein. Spezifische Beispiele sind N-Vinylformamid, N-Vinylpyrrolidon und 4-Vinylpyridin.

Über die eingeführten Doppelbindungen läßt sich unter Bestrahlung mit energiereicher Strahlung eine Vernetzung der Polyacrylate durchführen. Diese Vernetzung kann vorteilhaft dann geschehen, wenn die Polyacrylatmasse bereits weiterverarbeitet, beispielsweise als Haftklebemasse auf einen Träger aufgetragen ist. Für die Vernetzung lassen sich insbesondere Elektronenstrahlen oder, nach Zugabe von Photoinitiatoren, auch ultraviolette Strahlung einsetzen. Als Phototinitiatoren seien, ohne sich unnötig beschränken zu wollen, beispielsweise genannt spaltende (radikalbildende) Photoinitiatoren, insbesondere α-Spalter, und Wasserstoffabstraktoren. Zur Gruppe der photospaltenden Initiatoren seien bespielhaft genannt aromatische Carbonylverbindungen, insbesondere Benzoinderivate, Benzilketale und Acetophenonderivate. Zu den H-Abstraktoren gehören beispielsweise aromatische Ketone, wie z. B. Benzophenon, Benzil, Thioxanthone.

Vor der Elektronenstrahlvernetzung werden zu dem zu vernetzenden Polymer bevorzugt Vernetzer hinzugegeben. Geeignete Vernetzersubstanzen in diesem Sinne sind bi- oder multifunktionelle Acrylate, bi- oder multifunktionelle Isocyanate oder bi- oder multifunktionelle Epoxide. Verwendet werden können hier aber auch alle weiteren, dem Fachmann geläufigen bi- oder multifunktionellen Verbindungen, die in der Lage sind, Polyacrylate zu vernetzen.

Weiterhin werden die Polymere zur Herstellung von Haftklebemassen optional mit Harzen abgemischt. Als Harze sind beispielsweise Terpen-, Terpenphenolharze, C₅- und C₉-Kohlenwasserstoffharze, Pinen-, Inden- und Kolophoniumharze allein und auch in Kombination miteinander einsetzbar. Prinzipiell lassen sich aber alle in dem entsprechenden Polyacrylat löslichen Harze verwenden, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.

Des weiteren können ein oder mehrere zusätzliche Additive wie Weichmacher, verschiedene Füllstoffe (beispielsweise Ruß, TiO₂, Voll- oder Hohlkugeln aus Glas oder anderen Materialien, Kieselsäure, Silikate, Kreide) Keimbildner, Blähmittel, Beschleuniger, Fettsäuren, Alterungsschutzmittel, Ozonschutzmittel, Lichtschutzmittel und/oder Compoundierungsmittel zugesetzt werden. Außerdem ist der Zusatz von blockierungsfreien Isocyanaten möglich.

Eine Weiterentwicklung, die das erfindungsgemäße Verfahren besonders günstig für die Herstellung von beispielsweise Klebebändern macht, zeichnet sich dadurch aus, daß die Haftklebemasse direkt aus der Schmelze heraus weiterverarbeitet wird. Die in diesem Verfahren hergestellten Haftklebemassen lassen sich in gut für den Heißschmelz- (Hotmelt-) Prozeß verwenden. Besonders die mit Acrylsäureester modifizierten Polyacrylate zeichnen sich durch eine hohe thermische Stabilität und somit durch gute Eignung für den Hotmelt-Prozeß aus.

Insbesondere erfindungsgemäß von Vorteil ist eine Weiterverarbeitung, bei der die Schmelzhaftklebemasse auf einen Träger aufgetragen wird.

Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Schäume, Gewebe und Gewebefolien sowie Trennpapier (beispielsweise Glassine, HDPE, LDPE) verwenden. Diese Aufzählung soll nicht abschließend sein.

Die Erfindung betrifft weiterhin die Haftklebemasse, welche nach dem erfindungsgemäßen Verfahren beziehungsweise einer seiner Weiterentwicklungen erhalten wurde.

Weiterhin ist Inhalt der Erfindung die Verwendung der so erhaltenen Haftklebemasse für ein Klebeband, wobei die Acrylathaftklebemasse als ein- oder doppelseitiger Film auf einem Träger vorliegt.

Das erfindungsgemäße Verfahren umfaßt somit die Darstellung eines gesättigten Polyacrylates, welches in einer polymeranalogen Reaktion mit Doppelbindungen entlang der Seitenketten modifiziert wird.

Im Vergleich zu nicht-funktionalisierten Polyacrylaten sind die durch das erfindungsgemäße Verfahren hergestellten Polyaacrylatschmelzhaftklebemassen bedeutend reaktiver für die radikalische Vernetzung der Polymerketten, insbesondere die durch Elektronenstrahlen initiierte Vernetzung. Die zur optimalen Vernetzung erforderliche Dosis kann herabgesetzt werden, wodurch weniger Energie benötigt wird und im Fall der Elektronenstrahl-Vernetzung das Trägermaterial weniger geschädigt wird. Zudem wurde eine kohäsionssteigernde Wirkung erzielt.

Im Gegensatz zu durch allylische Doppelbindungen modifizierte Polyacrylate wird die thermische Stabilität bei den durch das erfinderische Verfahren erzeugten Polyacrylaten nicht wesentlich herabgesetzt. Die thermische Stabilität bleibt für die Verarbeitung im Hotmelt-Beschichtungs-Verfahren ausreichend hoch. So sind derart hergestellte Reinacrylatsysteme bei 140 °C, harzabgemische Systeme bei 120 °C für mindestens 48 Stunden gelfrei.

### Beispiele

Die Erfindung soll im folgenden durch einige Beispiele näher erläutert werden, ohne sich hierdurch unnötig beschränken zu wollen.

In Abhängigkeit von den gewünschten klebtechnischen Eigenschaften der Acrylathotmelts wird eine Auswahl an Acryl- und Vinylmonomeren getroffen.

### Testmethoden

Folgende Testmethoden wurden angewendet, um die klebtechnischen Eigenschaften der hergestellten Haftklebemassen zu evaluieren.

### Scherfestigkeit (Test A)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm x 13 mm (Länge x Breite). Anschließend wurde mit einem Gewicht von 2 kg das Klebeband viermal auf den Stahlträger gedrückt. Bei Raumtemperatur wurde ein Gewicht von 1 kg an dem Klebeband befestigt und die Zeit bis zum Herunterfallen des Gewichtes gemessen.

Die gemessenen Scherstandzeiten sind in Minuten angegeben und entsprechen dem Mittelwert aus drei Messungen.

### Bestimmung des Gelanteils (Test B)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert, also der nicht in Toluol lösliche Gewichtsanteil des Polymers, bestimmt.

### Herstellung der Proben

Die verwendeten durch Hydroxygruppen funktionalisierten Acrylate bzw. Methacrylate sind kommerziell erhältlich. 2-HEA (2-Hydroxyethylacrylat) und 2-HEMA (2-Hydroxyethylmethacrylat) wurden zuvor destillativ gereinigt und unter Stickstoffatmosphäre aufbewahrt.

### Beispiel 1

Ein für radikalische Polymerisationen konventioneller Reaktor wurde mit 500 g 2-Ethylhexylacrylat, 400 g Methylacrylat, 50 g Butylacrylat, 50 g 2-Hydroxyethylmethacrylat und 540 g Aceton/Siedegrenzbenzin (1:1) befüllt. Nach 45 Minuten Durchleiten von Stickstoffgas und zweimaligen Entgasen wurde der Reaktor unter Rühren auf 58 °C hochgeheizt, weiterhin wurden 0,2 g Azoisobutyronitril (AIBN) hinzugegeben. Anschließend wurde das äußere Heizbad auf 70 °C erwärmt und die Reaktion konstant bei dieser Außentemperatur durchgeführt. Nach 1 h Reaktionszeit wurde wiederum 0,2 g AIBN hinzugegeben. Nach 3 und 6 h wurde mit jeweils 250 g Aceton/Siedegrenzbenzin (1:1) verdünnt. Die Reaktion wurde nach 24 h Reaktionszeit abgebrochen und auf Raumtemperatur abgekühlt.

Zur klebtechnischen Ausprüfung wurde die Klebemasse mit einem Masseauftrag von 50 g/m² auf eine mit einem Vorstrich (Primer) versehene PET-Folie aufgetragen (23 µm Dicke) und mit einer Elektronenstrahl-Dosis von 20 kGy bei einer Beschleunigungsspannung von 230 kV bestrahlt (Elektronenstrahl-Anlage der Fa. Crosslinking). Anschließend erfolgte die klebtechnische Ausprüfung nach den Testmethoden A und B.

### Beispiel 2

Es wurde analog Beispiel 1 vorgegangen. Die Polymerisation wurde mit 10 g Acrylsäure, 375 g 2-Ethylhexylacrylat, 200 g Methylacrylat, 375 g Butylacrylat, 40 g 2-Hydroxyethylacrylat und 540 g Aceton/Siedegrenzbenzin (1:1) durchgeführt.

Die weiterhin eingesetzten Lösungsmittel- und Initiatormengen wurden beibehalten.

Zur klebtechnischen Ausprüfung wurde die Klebemasse mit einem Masseauftrag von 50 g/m² auf eine mit einem Vorstrich (Primer) versehene PET-Folie aufgetragen (23 µm Dicke). Die Muster wurden dann mit einer Elektronenstrahl-Dosis von 20 kGy bestrahlt. Die klebtechnische Ausprüfung erfolgte nach den Testmethoden A und B.

### Beispiel 3

Es wurde analog Beispiel 1 vorgegangen. Die Polymerisation wurde mit 20 g Acrylsäure, 810 g 2-Ethylhexylacrylat, 50 g Methylacrylat, 120 g 2-Hydroxyethylmethacrylat und 540 g Aceton/Siedegrenzbenzin (1:1) durchgeführt.

Die weiterhin eingesetzten Lösungsmittel- und Initiatormengen wurden beibehalten.

Zur klebtechnischen Ausprüfung wurde die Klebemasse mit einem Masseauftrag von 50 g/m² auf eine mit einem Vorstrich (Primer) versehene PET-Folie aufgetragen (23 µm Dicke). Die Muster wurden dann mit einer Elektronenstrahl-Dosis von 15 kGy bestrahlt. Die klebtechnische Ausprüfung erfolgte nach den Testmethoden A und B.

### Beispiel 4

Es wurde analog Beispiel 1 vorgegangen. Die Polymerisation wurde mit 20 g Acrylsäure, 430 g 2-Ethylhexylacrylat, 100 g Methylacrylat, 430 g Butylacrylat, 20 g 2-Hydroxyethylacrylat und 540 g Aceton/Siedegrenzbenzin (1:1) durchgeführt.

Die weiterhin eingesetzten Lösungsmittel- und Initiatormengen wurden beibehalten.

Zur klebtechnischen Ausprüfung wurde die Klebemasse mit einem Masseauftrag von 50 g/m² auf eine mit einem Vorstrich (Primer) versehene PET-Folie aufgetragen (23 µm Dicke). Die Muster wurden dann mit einer Elektronenstrahl-Dosis von 25 kGy bestrahlt. Die klebtechnische Ausprüfung erfolgte nach den Testmethoden A und B.

### Beispiel 1'

100 g der Acrylathaftklebemasse aus 1 wurden mit 1,36 g (Isocyanatoethyl)-acrylsäureester vermischt und unter Stickstoffatmosphäre für 30 Minuten auf 50 °C erhitzt. Anschließend wurde im Vakuum und unter Wärme das Lösemittel entfernt, die Klebemasse als Acrylathotmelt aufgeschmolzen und dann mit 50 g/m² auf eine mit einem Vorstrich (Primer) versehene PET-Folie beschichtet (23 µm Dicke). Die Muster wurden mit einer Elektronenstrahl-Dosis von 20 kGy bestrahlt. Die klebtechnische Ausprüfung erfolgte nach den Testmethoden A und B.

### Beispiel 2'

100 g der Acrylathaftklebemasse aus 2 wurden mit 1,88 g (Isocyanatoethyl)-methacrylsäureester vermischt und unter Stickstoffatmosphäre für 30 Minuten auf 50 °C erhitzt. Anschließend wurde im Vakuum und unter Wärme das Lösemittel entfernt, die Klebemasse als Acrylathotmelt aufgeschmolzen und dann mit 50 g/m² auf eine mit einem Vorstrich (Primer) versehene PET-Folie beschichtet (23 µm Dicke). Die Muster wurden mit einer Elektronenstrahl-Dosis von 20 kGy bestrahlt. Die klebtechnische Ausprüfung erfolgte nach den Testmethoden A und B.

### Beispiel 3'

100 g der Acrylathaftklebemasse aus 3 wurden mit 0,87 g (Isocyanatoethyl)-acrylsäureester vermischt und unter Stickstoffatmosphäre für 30 Minuten auf 50 °C erhitzt. Anschließend wurde im Vakuum und unter Wärme das Lösemittel entfernt, die Klebemasse als Acrylathotmelt aufgeschmolzen und dann mit 50 g/m² auf eine mit einem Vorstrich (Primer) versehene PET-Folie beschichtet (23 µm Dicke). Die Muster wurden mit einer Elektronenstrahl-Dosis von 15 kGy bestrahlt. Die klebtechnische Ausprüfung erfolgte nach den Testmethoden A und B.

### Beispiel_3"

100 g der Acrylathaftklebemasse aus 3 wurden mit 3,48 g (Isocyanatoethyl)-acrylsäureester vermischt und unter Stickstoffatmosphäre für 30 Minuten auf 50 °C erhitzt. Anschließend wurde im Vakuum und unter Wärme das Lösemittel entfernt, die Klebemasse als Acrylathotmelt aufgeschmolzen und dann mit 50 g/m² auf eine mit einem Vorstrich (Primer) versehene PET-Folie beschichtet (23 µm Dicke). Die Muster wurden mit einer Elektronenstrahl-Dosis von 15 kGy oder 5 kGy bestrahlt. Die klebtechnische Ausprüfung erfolgte nach den Testmethoden A und B.

### Beispiel 4'

100 g der Acrylathaftklebemasse aus 4 wurden mit 3,20 g (Isocyanatoethyl)-acrylsäureester vermischt und unter Stickstoffatmosphäre für 30 Minuten auf 50 °C erhitzt. Anschließend wurde im Vakuum und unter Wärme das Lösemittel entfernt, die Klebemasse als Acrylathotmelt aufgeschmolzen und dann mit 50 g/m² auf eine mit einem Vorstrich (Primer) versehene PET-Folie beschichtet (23 µm Dicke). Die Muster wurden mit einer Elektronenstrahl-Dosis von 25 kGy oder 5 kGy bestrahlt. Die klebtechnische Ausprüfung erfolgte nach den Testmethoden A und B.

### Resultate

Die für die Herstellung der Acrylathaftklebemassen untersuchten Comonomere sind in Tabelle 1 zusammengestellt. Es wurde konventionell mit AIBN (Azoisobutyronitril) in einem Gemisch aus Aceton/Siedegrenzenbenzin polymerisiert.

| Tabelle 1 | | | | | | |
|---|---|---|---|---|---|---|
| Beispiel | AS [%] | 2-EHA [%] | MA [%] | n-BA [%] | 2-HEA [%] | 2-HEMA [%] |
| 1 | 0 | 50 | 40 | 5 | 0 | 5 |
| 2 | 1 | 37,5 | 20 | 37,5 | 4 | 0 |
| 3 | 2 | 81 | 5 | 0 | 0 | 12 |
| 4 | 2 | 43 | 10 | 43 | 2 | 0 |

| | | | | | | |
|---|---|---|---|---|---|---|
| AS: Acrylsäure; 2-EHA: 2-Ethylhexylacrylat; MA: Methylacrylat; n-BA: n-Butylacrylat; 2-HEA: 2-Hydroxyethylacrylat; 2-HEMA: 2-Hydroxyethylmethacrylat | | | | | | |

Neben der polymeranalogen Reaktion wurden die Beispiele 1 - 4 auch für Referenzzwecke eingesetzt. Mit diesen Mustern sollen die Unterschiede bezüglich Kohäsion und Vernetzbarkeit gegenüber den Vinyl-modifizierten Polyacrylaten aufgezeigt werden. Hierfür wurden die Polymere konventionell aus Lösung auf eine mit einem Vorstrich (Primer) versehende 23 µm dicke Polyesterfolie aufgetragen. Nach dem Trocknen bei 120 °C für 10 Minuten lag der Masseauftrag der reinen Klebemassen bei 50 g/m². Nach der Härtung mit Elektronenstrahlen wurde von den bestrahlten Mustern der Gelwert (Gewichtsanteil des Polymers, der nicht in Toluol löslich ist) gemessen. Der Gelwert ist ein Indiz für die Effizienz der Vernetzung und liefert eine sehr gute Vergleichbarkeit bei Bestrahlung mit der identischen Elektronenstrahl-Dosis. Zur Beurteilung der klebtechnischen Eigenschaften wurde zudem ein Schertest bei Raumtemperatur durchgeführt. Mit dem Schertest lassen sich Aussagen über die Kohäsion einer Klebmasse treffen. In Tabelle 2 sind die Ergebnisse dargestellt.

| Tabelle 2 | | | |
|---|---|---|---|
| Beispiel | Elektronenstrahl-Dosis [kGy] | Gelwert [%] | Scherstandzeiten RT,10 N [min] |
| 1 | 20 | 43 | 2475 |
| 2 | 20 | 41 | 2055 |
| 3 | 15 | 34 | 4530 |
| 4 | 25 | 46 | 2325 |

| | | | |
|---|---|---|---|
| Masseauftrag je 50 g/m² | | | |

Alle Beispiele wurden mit Elektronenstrahlen gehärtet, wobei je nach Muster unterschiedliche Elektronenstrahl-Dosen eingesetzt wurden. Die erzielten Gelwerte variieren und sind abhängig vom Polyacrylat und von der Elektronenstrahl-Dosis. Insgesamt ist das Niveau mit etwa 40 % unlöslichen Anteil in Toluol relativ niedrig. Dadurch ist auch die Kohäsion dieser Klebemassen sehr niedrig. Die Scherfestigkeit lag in allen Fällen klar unterhalb der erforderlichen Marke von 10000 Minuten, die ein hochscherfestes Acrylathaftklebeband bei einem Schergewicht von 10 N bei Raumtemperatur erreichen sollte.

Mit diesen Ergebnissen als Referenz wurden die Beispiele 1 - 4 mit den Verbindungen (Isocyanatoethyl)-acrylsäureester oder (Isocyanatoethyl)-methacrylsäureester umgesetzt. Die eingesetzten Mengen an Isocyanaten sind in Tabelle 3 zusammenfassend dargestellt.

| Tabelle 3 | | | | |
|---|---|---|---|---|
| Beispiel | Basis-polymer | Moläquiv. Isocyanat | (Isocyanatoethyl)-acrylsäureester | (Isocyanatoethyl)-methacrylsäureester |
| 1' | 1 | 0,25 | 1,36 Gew.-% | 0 |
| 2' | 2 | 0,25 | 0 | 1, 88 Gew.-% |
| 3' | 3 | 0,1 | 0,87 Gew.-% | 0 |
| 3" | 3 | 0,75 | 3.,48 Gew.-% | 0 |
| 4' | 4 | 0,5 | 3,20 Gew.-% | 0 |

Beispiel 1' wurde mit 0,25 Moläquivalenten (Isocyanatoethyl)acrylsäureester umgesetzt. Dagegen ließ man Beispiel 3 mit unterschiedlichen Mengen des (Isocyanatoethyl)acrylsäureesters reagieren. Beispiel 2 wurde zum Vergleich mit 0,25 Moläquivalenten (Isocyanatoethyl)methacrylsäureester umgesetzt.

Für die Umsetzung von Beispiel 4 wurden 0,5 Moläquivalente (Isocyanatoethyl)acrylsäureester eingesetzt. Zur vollständigen Umsetzung der eventuell verbleibenden Restmengen an Isocyanat wird nach dem Hotmeltbeschichtungsprozeß der Haftklebemasse optional mit Elektronenstrahlen vernetzt. Während der Bestrahlung werden Radikale entlang der Polymerketten gebildet, die mit nicht abreagierten Isocyanaten über die Doppelbindung reagieren. Somit werden die toxischen Isocyanate dauerhaft in die Haftklebemasse gebunden und können auch bei Lagerung über einen längeren Zeitraum nicht aus der Klebemasse entweichen. Damit entfällt das Toxizitätsproblem für den Anwender.

Nach der durchgeführten Reaktion wurden die Beispiele 1' - 4' auf eine mit einem Vorstrich (Primer) versehene Polyesterträger (23 µm Dicke) als Hotmelt durch eine Düse beschichtet und dann analog zu Tabelle 2 mit Elektronenstrahlen gehärtet. Anschließend erfolgt eine klebtechnische Ausprüfung. Während des Hotmelt-Prozesses traten Temperaturen zwischen 100 und 120 °C auf, die aber nicht zu einer Vergelung der einzelnen Haftklebemassen führten. Der Masseauftrag der reinen Acrylathaftklebemasse lag wiederum bei 50 g/m². Es wurden die identischen Elektronenstrahl-Dosen verwendet. Die Ergebnisse dieser Ausprüfungen sind in Tabelle 4 zusammengefaßt.

| Tabelle 4 | | | |
|---|---|---|---|
| Beispiel | Elekronenstrahl-Dosis [kGy] | Gelwert [%] | Scherstandzeiten RT, 10 N [min] |
| 1' | 20 | 74 | 7765 |
| 2' | 20 | 66 | +10000 |
| 3' | 15 | 62 | +10000 |
| 3" | 15 | 85 | 5 |
| 4' | 25 | 90 | 5 |

| | | | |
|---|---|---|---|
| 50 g/m² Masseauftrag | | | |

Der Effekt der Doppelbindungen auf die Elektronenstrahl-Vemetzung ist beachtlich. Bei gleicher Dosis steigt der Gelwert dramatisch an. Die Muster 3" und 4' sind übervemetzt und besitzen kaum noch haftklebende Eigenschaften. Dagegen zeigt sich bei den Beispielen 1', 2' und 3', daß die effizientere Vernetzung einen eindeutig positiven Einfluß auf die Kohäsion hat. Die Muster 2' und 3' erreichen im 10 N-Schertest einen Wert von mehr als 10000 Minuten. Auch die Kohäsion von Muster 1' steigt deutlich an. Zur Ermittlung der optimalen Kohäsion wurden die Muster 3" und 4'emeut mit einer geringeren Elektronenstrahl-Dosis bestrahlt (s. Tabelle 5).

| Tabelle 5 | | | |
|---|---|---|---|
| Beispiel | Elektronenstrahl-Dosis [kGy] | Gelwert [%] | Scherstandzeiten RT, 10 N [min] |
| 3" | 5 | 61 | +10000 |
| 4' | 5 | 65 | +10000 |

| | | | |
|---|---|---|---|
| Masseauftrag je 50 g/m² | | | |

Mit einer Elektronenstrahl-Dosis von nur 5 kGy wurde für die Muster 3" und 4' bereits ein Gelwert von über 60 % erreicht. Der für diese Muster optimale Vernetzungsbereich steigert wiederum die Kohäsion dieser Haftklebemassen, und die Scherstandzeiten sind größer als 10000 Minuten bei RT mit einem Schergewicht von einem Kilo.

## Patentansprüche

1. Verfahren zur Herstellung einer Haftklebemasse auf Acrylatbasis, bei dem
a) zunächst durch freie radikalische Polymerisation (Co-)Polymere aus den folgenden Monomeren hergestellt werden:
i) eine Mischung von Acrylmonomeren oder aus Acryl- und Vinylmonomeren
ii) Vinylgruppen enthaltende Monomere mit jeweils mindestens einer gegenüber radikalischer Polymerisation unreaktiven funktionellen Gruppe, wobei die funktionellen Gruppen derart gewählt werden, daß sie in der Lage sind, mit Isocyanatogruppen polymeranaloge Reaktionen einzugehen, mit einem Anteil von 0,1 bis 25 Gew.-% am Monomergemisch,
b) durch eine weitere Reaktion unter Zugabe von (Isocyanatoethyl)acrylsäureester und/oder (Isocyanatoethyl)methacrylester Doppelbindungen entlang der Polymerkette eingeführt werden, und
c) nach der Reaktion zwischen den funktionellen Gruppen und den Isocyanatogruppen eine Vernetzung der Polymere durch Bestrahlung mit energiereicher Strahlung stattfindet,
**dadurch gekennzeichnet, dass**
die radikalische Polymerisation a) vor der weiteren Reaktion b) abgeschlossen ist.

2. Verfahren nach einem der vorangehenden Ansprüche, **dadurch gekennzeichnet, daß** nach der Polymerisation ein Aufkonzentrationsschritt stattfindet, bis der Lösungmittelgehalt nach der Aufkonzentration nicht mehr größer als 2 Gew.%, insbesondere nicht größer als 0,5 Ges.-%, ist,
und der Aufkonzentrationsschritt, die Zugabe der (Isocyanatoethyl)acrylsäureester und/oder (Isocyanatoethyl)methacrylester und die Reaktion der funktionellen Gruppen mit dem (Isocyanatoethyl)acrylsäureester und/oder (Isocyanatoethyl)meth-acrylester in einer einzigen Apparatur stattfindet, insbesondere in einem Extruder.

3. Verfahren nach einem der vorangehenden Ansprüche, **dadurch gekennzeichnet, daß** Hydroxy-, Amin-, Carbonsäure- und/oder Amidgruppen als funktionelle Gruppen dienen.

4. Verfahren nach einem der vorangehenden Ansprüche, **dadurch gekennzeichnet, daß** als Monomer für die Copolymerisation mindestens eine Verbindung der folgenden allgemeinen Formel eingesetzt wird: 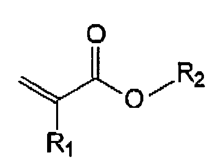 wobei R₁ = H oder CH₃ ist und der Rest R₂ gewählt wird aus der Gruppe der verzweigten oder unverzweigten, gesättigten Alkylgruppen mit 4 bis 14, bevorzugt 4 bis 9 Kohlenstoffatomen.

5. Verfahren nach einem der vorangehenden Ansprüche, **dadurch gekennzeichnet, daß** als Monomer für die Copolymerisation mindestens eine Verbindung aus der folgenden Gruppe verwendet wird:
Vinylester, Vinylether, Vinylhalogenide, Vinylidenhalogenide, Nitrile ethylenisch ungesättigte Kohlenwasserstoffe, Vinylverbindungen mit aromatischen Cyclen und Heterocyclen in α-Stellung.

6. Verfahren nach einem der vorangehenden Ansprüche, **dadurch gekennzeichnet, daß** der Anteil an (Isocyanatoethyl)acrylsäureester und/oder (Isocyanatoethyl)methacrylester 0,1 - 20 Gew.-% umfaßt; bezogen auf die Comonomerzusammensetzung.

7. Verfahren nach einem der vorangehenden Ansprüche, **dadurch gekennzeichnet, daß** die Haftklebemasse aus der Schmelze heraus weiterverarbeitet wird, insbesondere auf einen Träger aufgetragen wird.

8. Klebeband mit einer ein- oder beidseitig auf einem Träger aufgetragenen Acrylathaftklebemasse nach einem Verfahren nach einem der vorangehenden Ansprüche.

## Claims

1. Process for preparing an acrylate-based pressure sensitive adhesive, in which
a) first of all (co)polymers are prepared from the following monomers by free radical polymerization:
i) a mixture of acrylic monomers or of acrylic and vinylic monomers
ii) monomers which contain vinyl groups and each have at least one functional group which is unreactive in respect of free-radical polymerization, the functional groups being chosen such that they are able to undergo polymer-analogous reactions with isocyanato groups, with a fraction of 0.1 to 25% by weight in the monomer mixture,
b) double bonds are introduced along the polymer chain by a further reaction with the addition of (isocyanatoethyl)acrylic esters and/or (isocyanatoethyl)methacrylic esters, and
c) after the reaction between the functional groups and the isocyanato groups the polymers are crosslinked through exposure to high-energy radiation,
**characterized in that**
the free radical polymerization a) is terminated prior to the further reaction b).

2. Process according to the preceding claim, **characterized in that** the polymerization is followed by a concentration step until the solvent content following concentration is no longer greater than 2% by weight, in particular not greater than 0.5% by weight,
and the concentration step, the addition of the (isocyanatoethyl)acrylic esters and/or (isocyanatoethyl)methacrylic esters, and the reaction of the functional groups with the (isocyanatoethyl)acrylic ester and/or (isocyanatoethyl)methacrylic ester takes place in a single apparatus, in particular in an extruder.

3. Process according to one of the preceding claims, **characterized in that** hydroxyl, amine, carboxylic acid and/or amide groups serve as functional groups.

4. Process according to one of the preceding claims, **characterized in that** at least one compound of the following general formula is used as a monomer for the copolymerization: 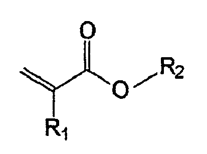 where R₁ = H or CH₃ and the radical R₂ is chosen from the group of the branched or unbranched, saturated alkyl groups having 4 to 14, preferably 4 to 9, carbon atoms.

5. Process according to one of the preceding claims, **characterized in that** at least one compound from the following group is used as a monomer for the copolymerization:
vinyl esters, vinyl ethers, vinyl halides, vinylidene halides, nitriles of ethylenically unsaturated hydrocarbons, vinyl compounds with aromatic rings and heterocycles in the α position.

6. Process according to one of the preceding claims, **characterized in that** the fraction of (isocyanatoethyl)acrylic ester and/or (isocyanatoethyl)-methacrylic ester comprises 0.1 - 20% by weight; based on the comonomer composition.

7. Process according to one of the preceding claims, **characterized in that** the pressure sensitive adhesive is subjected to further processing from the melt, and in particular is applied to a backing.

8. Adhesive tape with an acrylate pressure sensitive adhesive applied on one or both sides of a backing, in accordance with a process according to one of the preceding claims.

## Revendications

1. Procédé de fabrication d'une composition adhésive de contact à base d'acrylate, dans lequel
a) tout d'abord, par polymérisation radicalaire libre, on prépare des (co)polymères à partir des monomères suivantes :
(i) un mélange de monomères acryliques ou de monomères acryliques et vinyliques,
(ii) des monomères contenant des groupes vinyle, chacun comportant au moins un groupe fonctionnel inerte vis-à-vis d'une polymérisation radicalaire, les groupes fonctionnels étant choisis de façon à être à même d'entrer dans des réactions analogues à une polymérisation avec des groupes isocyanato, en une proportion de 0,1 à 25 % en poids par rapport au mélange de monomères,
b) par une autre réaction, par addition d'acrylate d'isocyanatoéthyle et/ou de méthacrylate d'isocyanatoéthyle, on introduit des doubles liaisons le long de la chaîne polymère, et
c) après la réaction entre les groupes fonctionnels et les groupes isocyanato, on procède à une réticulation des polymères par irradiation par un rayonnement riche en énergie,
**caractérisé en ce que** la polymérisation radicalaire a) est terminée avant l'autre réaction b).

2. Procédé selon la revendication précédente, **caractérisé en ce que**, après la polymérisation, on procède à une étape de concentration jusqu'à ce que la teneur en solvant, après la concentration, ne soit pas supérieure à 2 % en poids et en particulier ne soit pas supérieure à 0,5 % en poids, et la réaction de concentration, l'addition de l'acrylate d'isocyanatoéthyle et/ou du méthacrylate d'isocyanatoéthyle, et la réaction des groupes fonctionnels avec l'acrylate d'isocyanatoéthyle et/ou le méthacrylate d'isocyanatoéthyle, ont lieu dans un appareillage unique, en particulier dans une extrudeuse.

3. Procédé selon l'une des revendications précédentes, **caractérisé en ce qu'**on utilise en tant que groupes fonctionnels des groupes hydroxy, amine, acide carboxylique et/ou amide.

4. Procédé selon l'une des revendications précédentes, **caractérisé en ce qu'**on utilise en tant que monomère pour la copolymérisation au moins un composé ayant la formule générale suivante : 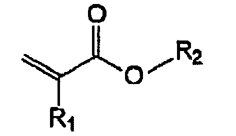 dans laquelle R₁ est H ou CH₃, et le radical R₂ est choisi dans le groupe des groupes alkyle saturés, ramifiés ou non ramifiés, ayant 4 à 14 et de préférence 4 à 9 atomes de carbone.

5. Procédé selon l'une des revendications précédentes, **caractérisé en ce qu'**on utilise en tant que monomère pour la copolymérisation au moins un composé choisi dans le groupe suivant : les esters vinyliques, les vinyléthers, les halogénures de vinyle, les halogénures de vinylidène, les nitriles, les hydrocarbures à insaturation éthylénique, les composés vinyliques comportant des cycles et hétérocycles aromatiques en position α.

6. Procédé selon l'une des revendications précédentes, **caractérisé en ce que** la proportion de l'acrylate d'isocyanatoéthyle et/ou du méthacrylate d'isocyanatoéthyle est de 0,1 à 20 % en poids par rapport à la composition de comonomères.

7. Procédé selon l'une des revendications précédentes, **caractérisé en ce que** la composition adhésive de contact est soumise, à partir de sa masse fondue, à un post-traitement, et en particulier est appliquée sur un support.

8. Bande adhésive comportant une composition adhésive de contact à base d'acrylate, appliquée sur un support sur une ou deux faces, obtenue par un procédé selon l'une des revendications précédentes.
